# EUROPEAN PATENT SPECIFICATION

(11) **EP 1 409 978 B1**
(45) Date of publication and mention of the grant of the patent: **09.09.2009**
(21) Application number: 02725375.6
(22) Date of filing: 28.03.2002
(51) Int. Cl.: G01K 15/00, G01K 13/00

(54) **TEMPERATURE PROBE ADAPTER**
TEMPERATURSONDENADAPTER
ADAPTATEUR POUR SONDE THERMOMETRIQUE

(30) Priority: 27.06.2001 US 301395 P; 28.08.2001 US 942334
(43) Date of publication of application: 21.04.2004
(73) Proprietor: Covidien AG, 8212 Neuhausen am Rheinfall (CH)
(72) Inventor: YERLIKAYA, Y. Denis, St. Louis, MO 63131 (US); BABKES, Mitchell, H., Maryland Heights, MO 63043 (US)
(74) Representative: Frohwitter, Bernhard
(86) International application number: PCT/US2002/009427
(87) International publication number: WO 2003/002966

(56) References cited:
- EP-A- 0 167 876
- WO-A-98/13677
- DE-A- 3 318 977
- GB-A- 2 183 342
- US-A- 4 008 614
- US-B1- 6 179 785

## Description

### FIELD OF THE INVENTION

This invention relates to electronic thermometers, in particular, to electronic thermometers having interchangeable or removable temperature probes.

### BACKGROUND OF THE INVENTION

Electronic thermometers have been widely used for quick and accurate measurements of body temperature. A temperature sensing probe is inserted orally, rectally, or in an axillary (under the arm) position to measure a patient's temperature. The temperature sensitive probe is connected to thermal circuitry in a temperature calculating unit by an electrical cable. The temperature sensitive probe generates a signal. This signal passes through the electric cable to the temperature calculating unit, where the signal is converted into an equivalent temperature reading. The temperature calculating unit has a digital display which shows the calculated temperature reading.

Before each measurement, a disposable plastic probe cover is placed over the temperature probe. The probe cover is then disposed after each temperature reading and a new probe cover is used for each subsequent measurement. When not in use, the temperature sensitive probe is stored in a housing, well or recess associated with the temperature calculating unit to minimize probe damage and probe contamination.

In typical use, prior art electronic thermometers are susceptible to at least three major sources of contamination. First, these thermometers employ the same temperature sensitive probes for oral, rectal and axillary temperature measurements. Even though disposable plastic probe covers are used for each measurement, cross-contamination may still result from use of the same probe. Therefore, rectal or axillary contaminants on the probe may be passed orally to the same and/or other patients.

The second source of contamination involves the probe storage chamber. Probes are stored in a single housing recess connected to the temperature calculating unit. This recess, once contaminated, may spread contamination to other probes as they may be interchangeably stored in the same recess. Over time, the storage chamber may also collect debris and contamination from the storage of multiple probes. Again, contaminants on the probe from rectal or axillary use may be passed orally to the same and/or other patients.

The third source of contamination relates to the disposable probe covers. Each time a patient's temperature is measured, the probe is inserted into a box of unused disposable probe covers. The temperature probes of the prior art share a common source of probe covers. Hence, probes used for taking rectal, oral and axillary temperatures are repeatedly inserted into the same source of probe covers. The probe, then, once contaminated, may spread contamination to other unused probe covers. Contaminants deposited on the unused probe cover may then be passed on to the same patient and/or other patients.

Since electronic thermometers are used for oral, axillary, and rectal temperature measurements, universal color codes have been adopted by hospitals, using red probes for rectal, temperature measurements and blue probes for oral and axillary temperature measurements. This color coding system makes it very easy for the healthcare practitioner to use the proper probe for each temperature reading, reducing the potential for cross-contamination.

The use of a blue probe for oral and axillary temperature measurements and a red probe for rectal temperature measurements reduces the first source of contamination. Separating probe use in this manner also improves patient perception issues related to the health practitioners using the same probe for all types of temperature measurements. Such practice, however, requires two thermometer units to be available at each location if the probes are not interchangeable. Maintaining two units at each location has been considered an inefficient and costly measure. Such a practice also makes the practitioner susceptible to using the most convenient, yet inappropriate, unit.

Some have developed thermometers with detachable probe units. U.S. Patent No. 4,008,614, assigned to Johnson & Johnson, New Brunswick, NJ, discloses an electronic thermometer unit usable with an oral temperature probe permanently attached to an oral isolation chamber. Similarly, there is a rectal probe permanently attached to a rectal isolation chamber. Connecting the probe and isolation chamber together as one unit thus precludes the inadvertent use of a probe with the wrong isolation chamber.

Similarly, U.S. Patent No. 4,619,271, assigned to Cheesebrough-Pond's, Inc., discloses an independent replaceable probe unit including a probe member and a probe chamber for holding the probe member, which can be easily removed and replaced together as a unit. The probe, cable and isolation chamber are all the same color. The permanent connection assures that the health practitioner stores the probe in the proper isolation chamber, thus reducing the risk of contamination leading to infection. A significant limitation of each of these approaches is that, even though the probe is permanently attached to an isolation chamber, both the oral and rectal probe units will be repeatedly and interchangeably inserted into the same box or boxes of probe covers, still exposing the probe to possible contamination.

U.S. Patent No. 4,572,365, assigned to Cheesebrough-Pond's Inc., discloses an improved probe cover holding and dispensing arrangement, the objective of which is to provide convenient access to clean probe covers. An electronic thermometer housing contains a chamber for receiving a canon of probe covers. Once the canon is inserted and secured within the housing, an aperture in the thermometer housing, normally closed by a sliding cover, provides access to the inserted carton of probe covers. In this arrangement, however, the probe and isolation unit may be interchanged between oral and rectal without changing the cartridge of probe covers. Both oral and rectal probe units share access to the same source of probe covers, providing a source of cross-contamination.

U.S. Patent No. 4,260,058 to Seymour et al. discloses an arrangement of mounting a holder on top of the thermometer device to receive a cartridge of probe covers. However, in this approach, probe covers are still stored with the temperature calculating unit. The disclosed arrangement does not require a dedicated probe and isolation chamber. This again may allow both oral and rectal probes access to a shared source of probe covers, providing a source of contamination.

Each of these prior art approaches fail to address the exposure to contamination as each temperature sensitive probe, oral or rectal, is repeatedly inserted into the same box or boxes of probe covers. In each approach; the same source of probe covers is used whether the covers are stored in connection with the temperature calculating unit or separate from the thermometer altogether.

Co-pending application entitled "Probe Tip Thermal Isolation and Fast Prediction Algorithm," filed on June 27, 2001 discloses an electronic thermometer that reduces all three major sources of contamination and cross-contamination by eliminating the use of the same probe for oral, auxiliary and rectal temperature measurement, the use of the same storage chamber for each type of probe, and the use of the same supply of probe covers for each type of probe. The co-pending application discloses a removable module capable of receiving and storing both a temperature sensitive probe and a clean, uncontaminated supply of disposable probe covers. The removable module includes an isolation chamber that prevents the storage of the temperature sensitive probe with a probe cover remaining on the probe. The removable module also allows the practitioner to readily view a supply of probe covers through a transparent module housing without disassembling or physically contacting the removable module. A module housing aids in infection control by being easily cleaned or inexpensively replaced. A patient's exposure to all of the common sources of contamination encountered in the use of electronic thermometers is reduced by isolating the storage of the temperature sensitive probe and the disposable probe covers used for oral, auxiliary and rectal temperature measurement into dedicated units or modules.

At least two types of removable modules are interchangeably operable with one temperature-calculating unit. The removable module is comprised of a probe assembly and a module housing. The module housing includes two chambers, one to store the probe and one to store a fresh supply of probe covers. Each of the module housing and probe assemblies are color coded according to the standard convention of red for rectal temperature measurement and blue for oral and auxiliary temperature measurements.

Electronic thermometers as disclosed in the referenced co-pending application and electronic thermometers disclosed in the prior art typically employ temperature sensor elements in the probe such as thermisters. The thermisters and thermister circuits must be calibrated during manufacturing to compensate for component variation between thermisters and thermister circuits. For example, thermisters output a particular resistance value as a function of temperature. The resistance value is interpreted by the electronic components of the electronic thermometer as a temperature reading, or as an indication of a predicted temperature reading. If the thermister resistance has excessive variation or deviates from the nominal resistance at a particular temperature then, a compensation resistor must be installed during manufacturing.

The calibration procedure is costly because it is labor intensive. During the calibration procedure, the resistance at the thermister must be measured at a controlled temperature and compensation resistors must be installed. Then, the resistance must be re-measured at a controlled temperature to assure that the calibration was successful. Expensive glass bulb thermisters having small component to component variation are used in typical electronic thermometer probes. These expensive thermistors also have a high thermal mass which increases the response time of the thermometer.

Calibration by using compensation resistors requires temperature probes to be calibrated at a single reference temperature. Single point calibration causes relatively high linearity errors in temperature calculations resulting in decreased accuracy.

The high costs associated with probe/sensor calibration and use of tight tolerance thermistors has made the use of multiple thermistors impractical in most probe applications. Some more accurate temperature calculation algorithms require input from more than one thermistor. Component costs have thereby rendered impractical the use of these more accurate temperature calculation algorithms.

Although color coding and other identifying features has made probe units identifiable to users, interchangeable probe units of different types are not typically identifiable by the electronic hardware. This limits the ability of the temperature calculation components to adapt to variations between the probe unit types.

WO 98/13677 describes a temperature sensing device including a sensor and a memory containing non-linear calibration data which characterise the sensor. US Patent No. 6,179,785 is directed to an ambient temperature recalibration system comprising a computer in communication with a tympanic thermometer which includes an ambient sensing system for sensing the surrounding temperature.

### SUMMARY OF THE INVENTION

The present invention provides an electronic thermometer according to claim 1. Further preferred aspects of the invention are provided according to the dependent claims.

The present invention reduces patient exposure to all sources of cross-contamination, aids in infection control, and provides a clean, uncontaminated, readily accessible source of probe covers. Embodiments of the present invention feature a probe assembly for an electronic thermometer, which does not require expensive calibration procedures during manufacturing and allows the use of inexpensive thermisters. A memory component such as an EEPROM stores calibration information and identifying information in the probe assembly.

The present disclosure provides various embodiments which locate the memory component proximately with electrical connecting components where the probe assembly is electrically mated to the thermometer base unit. A circuit board including the memory component is embedded in the strain relief portion of the probe cable by insert molding or encapsulation wherein only the mating portions of the connector are exposed. When the temperature probe assembly is electrically mated to the thermometer base unit, the memory component is in electrical communication with the electronics of the base unit.

Calibration information such as the resistance of the probe thermisters at corresponding calibration temperatures and probe identification data, i.e., serial numbers or probe type identifiers, is stored in the embedded memory component in the probe assembly. The electronic components of the base unit can read data from the memory component and compensate for variation in the probe thermisters according to the stored calibration information. The additional identifying information can be used by the thermometer base electronics to perform any number of functions. Such functions could include the use of separate algorithms for calculating a predicted temperature depending on the type of probe used.

The invention of the present disclosure is particularly useful in electronic thermometers having interchangeable probe assemblies. Features of the invention include instant automatic identification of a temperature probe in a removable module. Effective interchangeability of different types of removable module - based temperature probes or different probes of the same type is featured without requiring labor intensive hardware modification.

The invention further features improved performance and accuracy over prior art electronic thermometers. Embodiments of the invention feature more than one temperature sensor in a temperature probe for improved accuracy.

The invention also features storage of all calibration parameters of the temperature sensors including calibration data for at least two different reference temperatures. This feature of the invention reduces linearity errors and improves a regression process used in the temperature calculation algorithm.

The invention further features the use of a low cost, low thermal mass thermistor chip having a wide tolerance. This feature of the invention improves the thermal time constant and the overall response time of the thermometer as compared to conventional electronic thermometers which require tighter tolerance bulky glass bead type thermistors.

Further features of the invention include the reduction or elimination of calibration costs during manufacturing of temperature probe. Manufacturing costs are further reduced by mounting the memory component on the same small circuit board that acts as an interface between the probe cable conductors and their connector pins. Embodiments of the invention feature encapsulation of the memory components in a strain relief portion of the probe cable. Such encapsulation provides protection against fluid incursion into the electronic components and probe cable.

### BRIEF DESCRIPTION OF THE DRAWINGS

The foregoing and other features and advantages of the present invention will be more fully understood from the following detailed description of the illustrative embodiments, taken in conjunction with the accompanying drawings in which:
FIG. 1 is an illustration of an electronic thermometer according to at least one embodiment of the present invention;
FIG. 2 is an illustration of a temperature calculation unit according to at least one embodiment of the invention;
FIG. 3A is a rear view of a removable module according to at least one embodiment of the present invention;
FIG. 3B is a front view of a removable module according to at least one embodiment of the present invention;
FIG. 4 is an illustration of a removable module mating to a temperature calculating unit according to at least one embodiment of the present invention;
FIG. 5A is an illustration of a connector assembly according to at least one embodiment of the present invention;
FIG. 5B is an illustration of a connector assembly according to another embodiment of the present invention;
FIG. 6A is an illustration of a connector housing/PCB sub-assembly according to at least one embodiment of the invention;
FIG. 6B is an illustration of a connector housing/PCB sub-assembly according to another embodiment of the invention;
FIG. 7 is an illustration of a PCB according to at least one embodiment of the present invention;
FIG. 8 is an illustration of a complete probe assembly (first connector component, electrical cable and probe) according to at least one embodiment of the invention;
FIG. 9A is a front and top orthographic view of a second connector component according to at least one embodiment of the present invention;
FIG. 9B is a cross-sectional view of a terminal pin cavity in a second connector component according to at least one embodiment of the present invention; and
FIG. 9C is an illustration of a second connector component according to an embodiment of the invention.

### DETAILED DESCRIPTION OF THE INVENTION

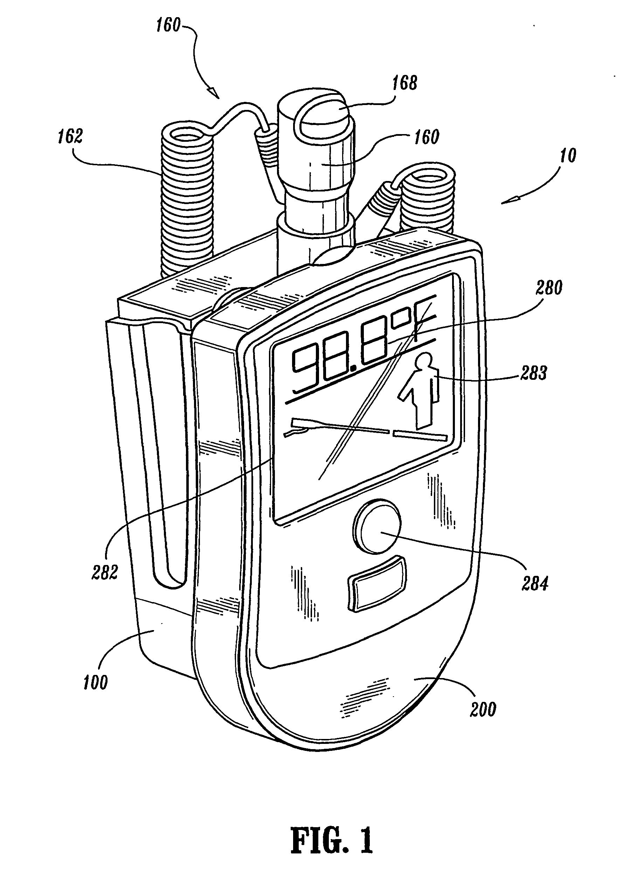

Reference is now made to the embodiments illustrated in FIGS. 1-9C wherein like numerals are used to designate like parts throughout. In cases where parts have similar form and function, similar numerals may be used for ease in interpretative cross referencing.

Referring to FIG. 1, a thermometer according to the present invention is shown. The thermometer includes a temperature calculating unit and a removable module that is mated and secured to the temperature calculating unit. When the removable module is secured to the temperature calculating unit, a connector assembly component and a mating header assembly component are properly aligned and together form an electrical connection. This electrical connection allows a signal detected by a temperature probe to be transmitted from the removable module to the temperature calculating unit. Once received, the temperature calculating unit converts the signal to a temperature reading. The temperature reading is observed through a display window.

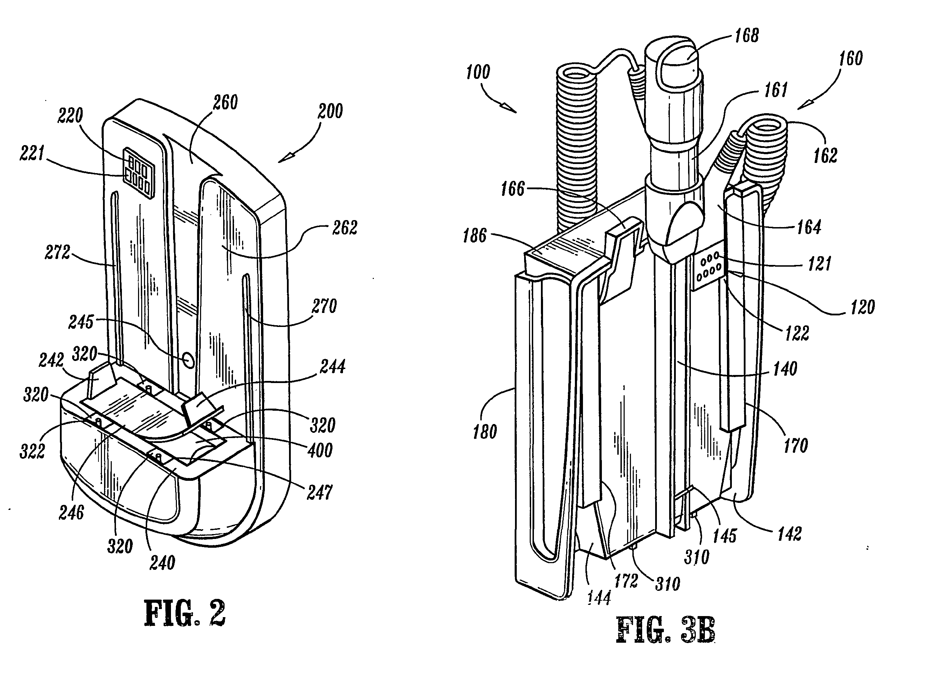

As shown at FIG. 2, there is shown a temperature calculating unit 200 according to at least one embodiment of the present invention. Fastening means are provided to secure a removable module to the temperature calculating unit. In an illustrative embodiment, a pair of rails 270, 272 are provided as fastening or alignment means to engage mating features in the removable module. Additional alignment means and securing means may be provided on the temperature calculating unit to facilitate mating with the removable module. For example, securing means 242, 244 includes tabs protruding from a battery compartment cover 246 and engage mating features in the removable module. The battery compartment cover 246 may be made from an elastomeric material so that the securing means 242, 244 are flexible and making cover 246 easily removable from the top of the battery compartment. The battery cover 246 fits within an orifice 247 in the mounting surface 240. A battery 400 is situated within the battery compartment. In an illustrative embodiment, the top of the battery compartment coincides with a mounting surface 240 which abuts the bottom surface of the removable module when the removable module is installed to the temperature unit. The mounting surface 240 also provides a location for trigger devices 322 which may be located in recesses 320 of the mounting surface 240. The trigger devices 322 can be used to distinguish the particular type of removable module that is installed to the temperature calculation unit by providing strikers or protrusions at particular positions on the bottom surface of the removable module which identify the particular type of removable module being used. A slot 260 is provided in the back surface 262 of the temperature calculation unit 200. The slot 260 engages the outer walls of an isolation chamber which protrudes from a front surface of the removable module. In the illustrative embodiment, the slot is shaped to provide a lead-in feature which assists in guiding the removable module while it is slidingly mated to the temperature calculation unit 200. A button 245 mounted in the slot is linked to the electronics of the temperature calculating unit 200. When depressed, the button 245 causes the temperature calculating unit 200 to turn off.

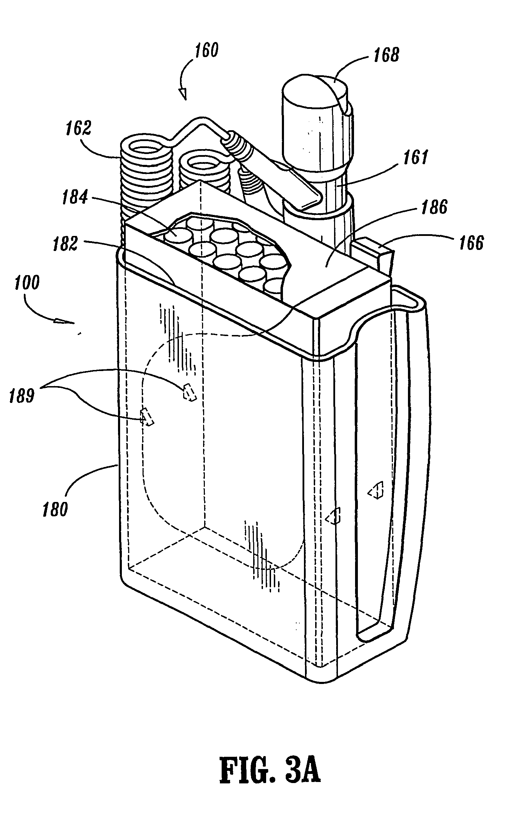

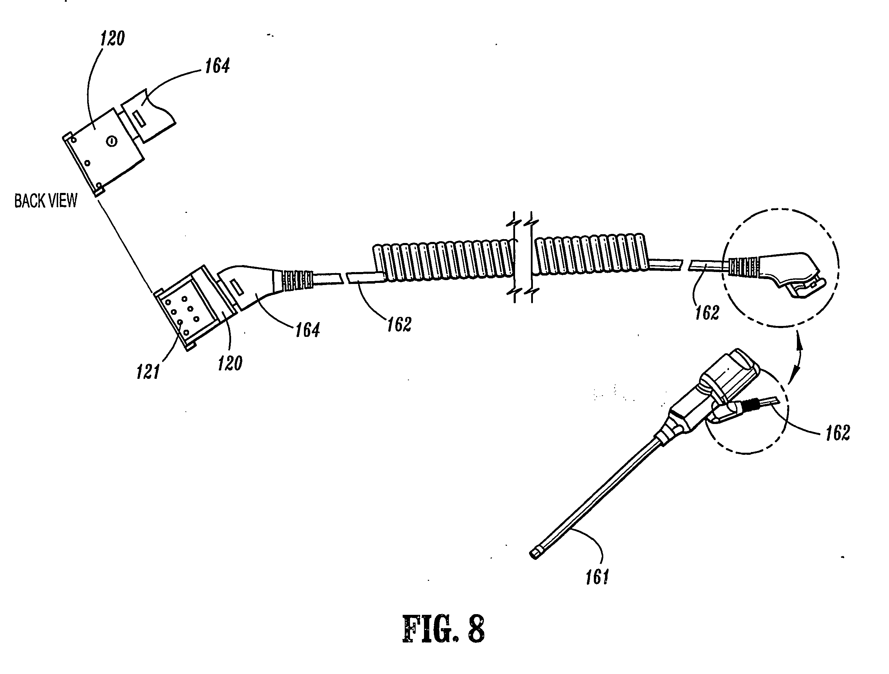

Now referring to FIG. 3A, a rear view of a removable module according to at least one embodiment of the present invention is shown. The removable module 100 includes a storage chamber 182 for storing disposable probe covers 184 which are packaged in cartons 186. The removable module 100 further includes a temperature sensitive probe assembly 160 and module housing 180. The probe assembly 160 comprises a temperature sensitive probe 161, electrical cable 162 and a first connector component 120. The temperature sensitive probe 161 is attached to electrical cable 162 (FIG. 8), which is connected at its opposite end to the first connector component 120. The probe assembly 160 locks into module housing 180 at a housing orifice 122. The probe assembly 160 may be fixedly attached or unlocked and detached from the module housing 180 for replacement if needed.

The module housing 180 contains an isolation chamber 140 and a storage chamber 182. As best shown in FIG. 3B, the isolation chamber 140 is positioned in the center of the back side wall of the module housing 180. When not in use, the probe 161 is inserted into the isolation chamber 140. When the removable module 100 is in its secured position with the temperature calculating unit 200, the probe 161 rests between the temperature calculating unit 200 and the storage chamber 182, providing additional physical protection to the probe 161. For the purposes of the present disclosure, the isolation chamber 140 maybe located anywhere within the module housing 180. The inside diameter of the isolation chamber 140 corresponds to the outside diameter of the probe 161, such that, the probe 161 cannot be inserted into the isolation chamber 140 with the probe cover 184 still attached to the probe 161.

Since the probe 161 and the isolation chamber 140 are both components of the same removable module 100, the probe 161 can be stored in only one isolation chamber 140, thus reducing the possibility of cross-contamination and spread of infection. If there is concern that the isolation chamber 140 has in any way been contaminated, the entire removable module 100 may be removed for cleaning. Alternatively, the module housing 180 may be inexpensively replaced.

At the bottom of the isolation chamber 140, there is a switch actuating device such as a paddle indicator 145 (FIG. 3B) for triggering an automatic on/off mechanism. When the probe 161 is inserted into the isolation chamber 140 during periods of nonuse, the probe 161 pushes the paddle indicator 145 and bends it into contact with the button 145 on the temperature calculating unit 200 (FIG. 2). The button 245 is linked to the electronics of the temperature calculating unit 200. When actuated, the button 245 causes the temperature calculating unit 200 to turn off. Upon withdrawal of the probe 161 from the isolation chamber 140, the paddle indicator releases. This causes the temperature calculating unit 200 to turn on and prepare for a temperature measurement. This automatic on/off mechanism conserves the battery life of the temperature calculating unit 200. The paddle indicator 145 may.also be used as a reset button, indicating when a new temperature reading may be taken. If the temperature calculating unit 200 has a tied shut off mechanism, the paddle indicator 145 may be used to reactivate the temperature calculating unit 200. This may be accomplished by inserting and removing the probe 161 from the isolation chamber 141, thus triggering the paddle indicator 145 and turning on the temperature calculating unit 200. The paddle indicator 145 may be any type of mechanical, electrical, magnetic or optical switch capable of differentiating between the presence and absence of the probe 161 in the isolation chamber 140.

Referring again to FIG. 3A, the module housing 180 also contains a storage chamber 182. A carton 186 of disposable probe covers containing disposal probe covers 184 fits snuggly into the storage chamber 182. The carton 186 may be perforated with tabs such that the practitioner can pull the perforated tear-away tab and expose several probe covers 184.

In an alternate embodiment, the storage chamber 182 may contain means to prevent the box of disposable covers from being removed and used interchangeably with other removable modules 100. For example, the storage chamber 182 may contain small projections 189 that puncture the sides of the carton of probe covers 186 such that attempts to remove the carton would cause the carton to tear. In another embodiment, the carton 186 may have a perforated bottom that tears. Therefore, if the carton is removed the bottom would tear out. The practitioner would then need to insert a fresh carton 186 of probe covers 184 into the storage chamber 182. This feature deters a practitioner from switching the probe covers from one removable module to another, increasing the potential for cross-contamination.

The entire removable module 100, including the probe 161, the electrical cable 162, the first connector component 120 and the module housing 180 is color coded according to the standard convention of blue for oral and axillary measurements and red for rectal measurements. In addition to being color coded, the module housing 180 of the present embodiment is transparent or translucent. Such a transparent housing allows the practitioner to conveniently view and count the number of probe covers 184 remaining in the carton 186 at any given time. Transparency of the module housing 180 also allows the practitioner to read the information on the carton 186, including instructions for use, warnings and reordering information. The completely transparent module housing 180 is one example according to the present disclosure.

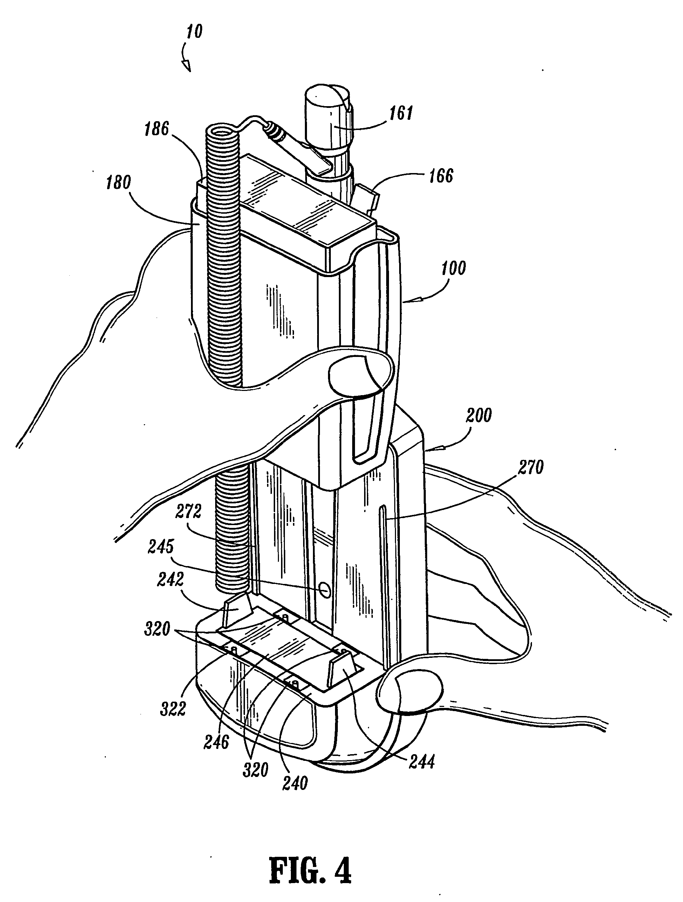

The module housing 180 may have, for example, a single transparent portion, such as any one side, top, front or back panel. When the carton 186 (FIG. 3B and 4) contains a top perforated tab 187, the contents may be viewed through a transparent top. Similarly, when the carton 186 contains a side panel perforation, the contents may be viewed through a transparent back panel on the module housing 180. In these situations, it is necessary only to have one transparent or translucent top portion or side panel to the module housing 180 for viewing and counting.

The module housing 180 includes fastening means to aid in mounting the removable module 100 to the backside of the temperature calculating unit 200. As best shown in FIGS. 2 and 3B, the fastening means used in the current embodiment are tracks 170 and 172, which are molded, recesses in module housing 180. These tracks 170 and 172 receive rails 270 and 272 on the temperature calculating unit 200. In addition, the module housing 180 contains securing means 142 and 144, which are also molded recesses in the module housing 180. Recesses 142 and 144 receive securing means 242 and 244 located on a mounting surface 240 of the temperature calculating unit 200. Removable module 100 is attached to the temperature calculating unit 200 by first aligning the rails 270 and 272 with tracks 170 and 172 and securing means 142 and 144 with securing means 242 and 244, then sliding the removable module 100 down on to the mounting surface 240 until a locking tab 166 snaps into place over the top edge of the temperature calculating unit 200. It should be understood that fastening means, securing means and locking tabs, as defined by the present disclosure, could be any connection device or configuration of connection devices that serve to firmly secure the removable module 100 in position on the temperature calculating unit 200.

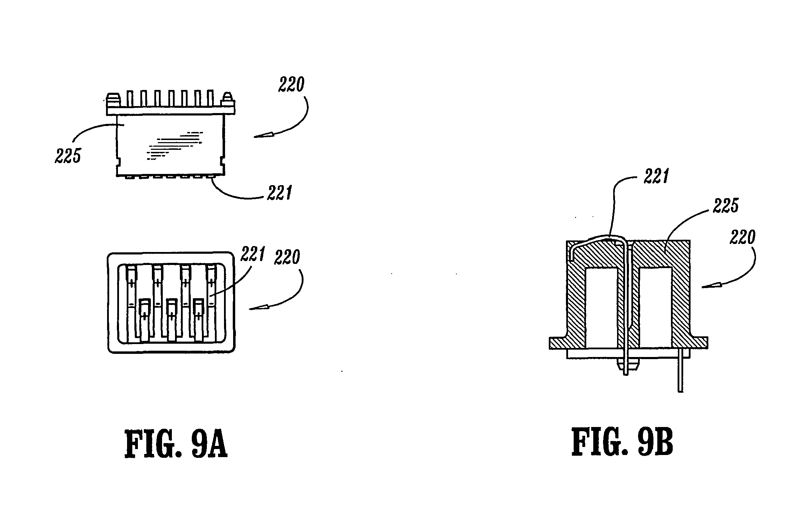

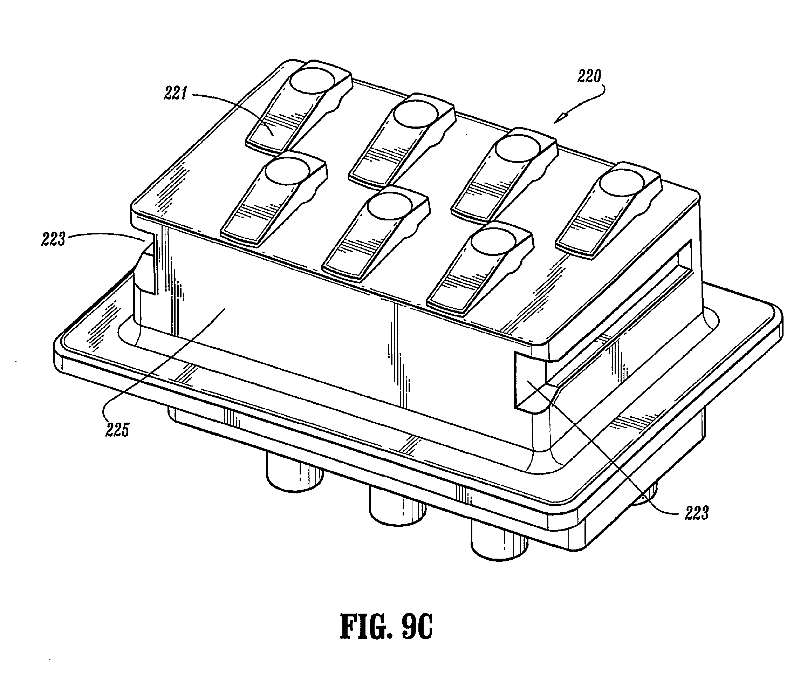

The temperature calculating unit 200 includes a second connector component 220 located on the side to which the removable module 100 is mounted. The second connector component 220 (FIG. 9) is wired to the thermometer circuitry within the temperature calculating unit 200. When the removable module 100 is secured to the temperature calculating unit 200, the first connector component 120 and second connector component 220 mate to form an electrical connection. The temperature calculating unit 200 receives the signal detected by the probe 161, transmitted through the first 120 and second 220 connector components, and converts the signal into a temperature reading 280. The resulting temperature reading 280 is observed through the display window 182.

The circuitry of temperature calculating unit 200 is powered by a battery 400. The battery 400 is accessed through a cover 246 that fits into orifice 247 within mounting surface 240. In the embodiment shown in FIG. 4, cover 246 is made from rubber to create a water tight seal, enabling the entire temperature calculating unit 200 to be submersed in water for cleaning. The cover 246 further comprises the securing means 242 and 244. The cover 246 can be peeled away from the mounting surface 240 to expose and replace the battery 400.

In an alternate embodiment, for example, referring again to FIGS. 2 and 3B, the removable module 100 and the temperature calculating unit 200 may also include means to detect the type of removable module 100 secured to the temperature calculating unit 200. Such means may include a two part switch which enables the temperature calculating unit 200 to sense the presence of an object connected to the mounting surface 240.

The temperature calculating unit 200 may have a plurality of recesses 320 on the mounting surface 240, each recess 320 containing a trigger device 322. There may be a plurality of corresponding protrusions, such as posts 310 (FIG. 3B) on the removable module 100. When the removable module 100 is connected to the temperature calculating unit 200, the posts 310 fit into the recesses 320, triggering the switches 322. The switches 322 are then sensed by the temperature calculating unit 200. Each type of removable module 100 may have a different number or location of posts 310. For example, an oral module 100 may have one post 310 which corresponds to switch 322 within recess 320, while the rectal module may have no posts 310 to trigger switches 322.

Upon connection of the module 100 to the temperature calculating unit 200, triggering of the switches 322 will result in two alternative signals. These two part switches then enable temperature calculating unit 200 to detect the type of movable module attached. Once the module type is detected, temperature calculating unit 200 will calibrate in order to make the appropriate temperature measurements. Providing two recesses on the mounting surface 240 gives the temperature calculating unit 200 a capability of differentiating four different types of modules and operating accordingly. It should be understood, however, that the two part switches described may consist of any known electrical, mechanical, magnetic or optical switch.

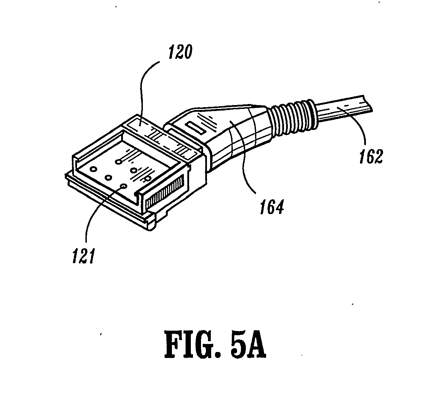

In at least one embodiment, the first 120 and second 220 connector components may carry encoded information related to probe identity and associated calibration parameters. Such encoded information enables temperature calculating unit 200 to detect the type of removable module 100 attached. As shown on FIGS. 5A-6B, spring loaded posts 121 on the first connector component 120 may be used to engage contact pads 221 on second connector component 220 (FIGS. 2, 9A, 9B and 9C). It is contemplated that the first 120 and the second 220 connector components may be any mechanical, electrical, magnetic or optical contacts such that when the two connection components are in proximity, a signal can pass from the removable module 100 to the temperature calculating unit 200. Thus, when removable module 100 is connected to temperature calculating unit 200, temperature calculating unit 200 reads the encoded information carried by the attached removable module 100 and automatically sets the corresponding operating conditions.

Now referring back to FIGS. 1-4, upon the connection of an oral/axillary type removable module 100 to the temperature calculating unit 200, the temperature calculating unit 200 reads the identity of the oral/axillary type probe 161. Whereupon, the second connector component 220 which is connected to the electronic circuitry of the temperature calculating unit 200, causes the display of an oral/axillary icon 283 located within window 282. This icon 283 indicates to the practitioner, that the thermometer 10 is ready to operate in the oral/axillary mode. Similarly, when a rectal type removable module 100 is connected to the temperature calculating unit 200, the temperature calculating unit 200 reads the identity of the rectal type removable module 100 and displays a corresponding icon 283 within window 282, indicating that the thermometer 10 is ready to operate in the rectal mode.

The operation of the thermometer 10 according to the present disclosure will now be described with reference to FIGS. 1-4. When a temperature measurement is to be taken, the practitioner selects the appropriate module and mounts the removable module 100 on to the temperature calculating unit 200. By way of example, if an oral temperature measurement is desired, a blue removable module 100 is secured to temperature calculating unit 200 by aligning the rails 270 and 272 of the temperature calculating unit 200 and the tracks 170 and 172 of the removable module 100. As best shown in FIG. 4, once the rails 270 and 272 are aligned, the practitioner slides the removable module 100 downward such that the bottom of the module 100 rests on mounting surface 240. In this sliding action, the securing means 242 and 244 is mated with recesses 142 and 144 until locking tab 166 snaps into place. When secured in this manner, first connector component 120 and second connector component 220 form the connection to activate the thermometer 10.

The temperature sensitive probe 161 is removed from the isolation chamber 140, activating the thermometer to a ready mode. The probe 161 is then inserted into a probe cover 184 within storage chamber 182. Insertion of the probe 161 into the probe cover 184 creates a snap fit between the probe 161 and probe cover 184. The probe 161 is withdrawn from the carton 186 with cover 184 attached. The practitioner pushes a button 284 (FIG. 1) to select the oral or axillary mode. A short beep indicates that the thermometer 10 is ready to take a measurement. The probe 161 is inserted into the patient's mouth. When the measurement is complete a long beep is sounded and the final temperature reading 280 is displayed. Temperature reading 280 is observed through display window 282. The probe 161 is then withdrawn from the patient's mouth and a probe button 168 is depressed to eject the probe cover 184 into an appropriate waste container. The probe 161 may then be inserted into another probe cover 184 in the carton 186 again if another reading is desired. Alternatively, the probe 161 is inserted back into the isolation chamber 140 for storage. The insertion of the probe 161 into the isolation chamber 140 switches the thermometer 10 to standby mode.

If a rectal temperature measurement is next desired, it is necessary only to change the removable module 100. To remove the oral type removable module 100, the practitioner first pulls back on a locking tab 166. Once the locking tab 166 is released, the practitioner slides the oral type removable module 100 off of rails 270 and 272 to disengage it from the temperature calculating unit 200. The rectal type removable module 100 is then secured to the temperature calculating unit 200 in the manner described above.

As discussed above, the probe 161, the isolation chamber 140 and the probe covers 184 are contained within one unit, i.e., the removable module 100. This removable module 100 prevents the interchangeable use of the probe 161, the isolation chamber 140 and probe covers 184. Thus, the removable module 100 of the current disclosure reduces all major sources of contamination by preventing the commingling of the probe 161, the isolation chamber 140 and the disposable probe covers 184. At the same time, the thermometer unit 10 of the current disclosure remains cost effective since it requires only one temperature calculating unit 200 to use with all types of probes 161.

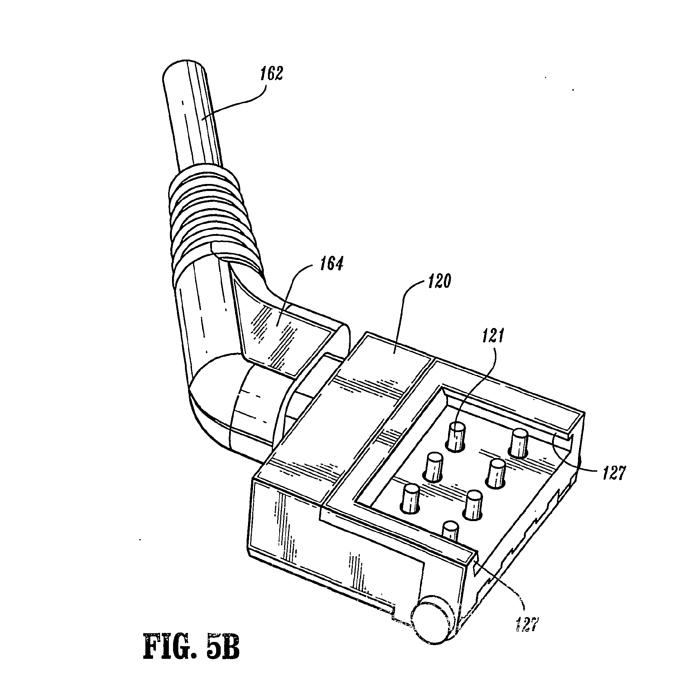

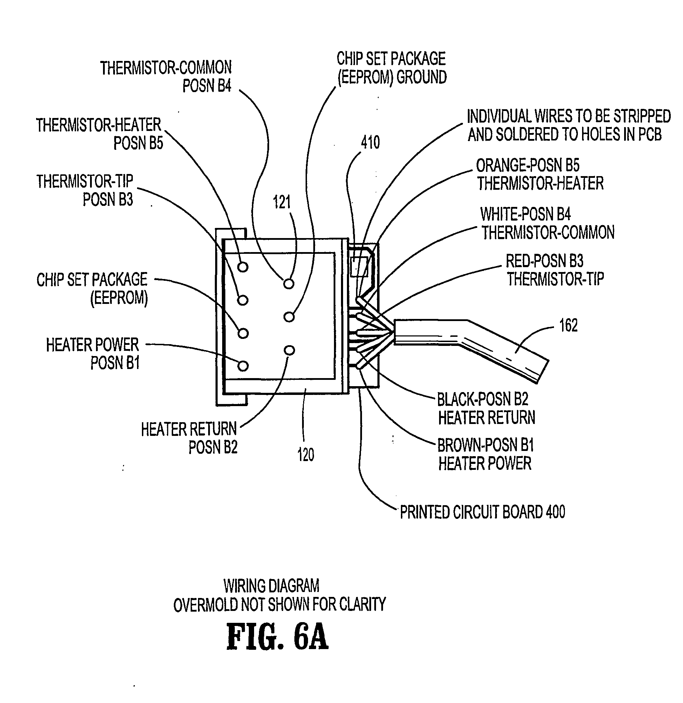

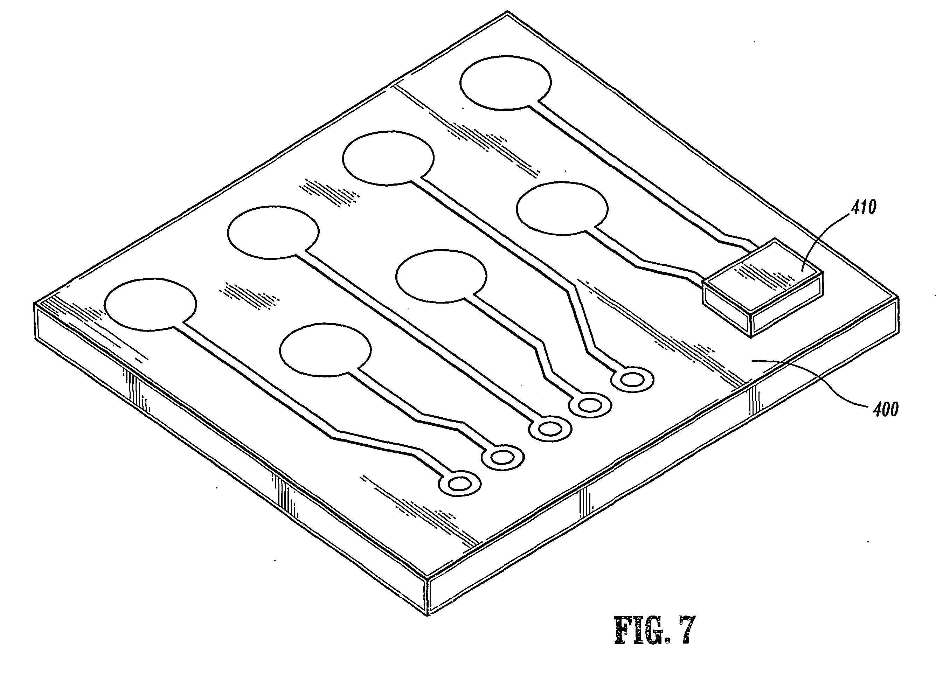

According to the present disclosure, the removable module 100 is instantly detectable and identifiable to the electronic components in the temperature calculation unit 200. Referring to FIGS. 1-4, illustrative embodiments of the thermometer 10 are shown. FIGS. 5A-9C further show illustrative embodiments of the connector components according to the present invention. An electrically erasable programmable read only memory EEPROM Integrated Circuit (IC) Chip 410 is soldered onto a small printed circuit board (PCB) 400 (FIG. 7) and configured to the first connector component 120 of electrical cable 162 (FIG. 6A). At least part of the PCB 400 is overmolded and encapsulated. (FIGS. 5A and 5B).

FIGS. 6A-6B illustrate a partially assembled first connector component 120 including PCB 400 having an EEPROM IC 410 soldered thereon. FIG. 7 illustrates the PCB 400 and EEPROM Chip 410 prior to its assembly to the first connector component 120. The first connector component 120 and strain relief 164 (FIGS. 5A and 5B) are coupled together prior top assembly to the removable module 100. Spring loaded posts 121 provide electrical connectivity between the electrical cable 162 and contact pads 221 in the second connector component 220 off the temperature calculating unit 200 (FIG. 2). The second connector component 220 is in electrical communication with the electronic components of the temperature calculating unit 200.

The EEPROM Chip 410, the PCB 400 and the electrical connections to the PCB 400 are protected from environmental factors by being encapsulated or over-molded. Such encapsulation renders these components water resistant and meets the Comite European de Normalisation-European Committee for Electrotechnical Standardization's (CEN) water resistance compliance requirement. The particular EEPROM Chip 410 used in thermometer 10 may include, for instance, a Parasite Power 256 Bit Single Wire Communicating 1-Wire EEPROM IC Chip such as the DS2430A model available from Dallas Semiconductor. The data sheet for the Dallas Semiconductor model DS2430A is incorporated herein by reference in its entirety.

The data line of the EEPROM Chip 410 is directly connected to a single port pin of the thermometer microprocessor. The EEPROM Chip 410 does not require any separate power connections because it receives power from the data line. The particular DS2430A model EEPROM Chip 410 communicates with the microprocessor at up to 16.3K bits per second. It is contemplated that various microprocessor communication speeds are with the spirit of the present disclosure. Upon power up, the microprocessor automatically reads a unique, factory laser-programmed and validated 64 bit registration number to identify the probe 161. The microprocessor then reads pre-stored 256 bit calibration and algorithm parameters which characterize the particular temperature probe in which the EEPROM Chip 410 is imbedded.

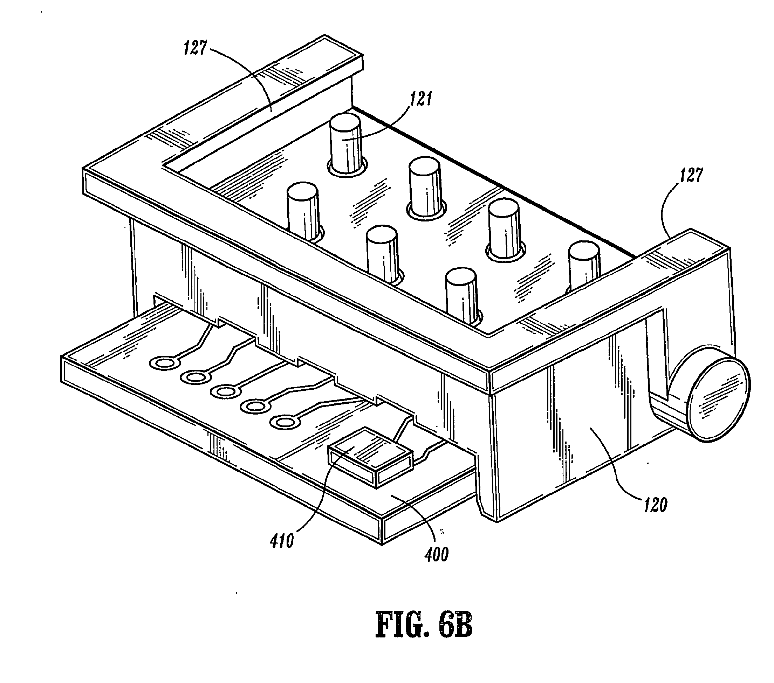

In at least one embodiment of the invention, one end of the electrical cable 162 is attached to the temperature probe 161 (FIG. 8) and the other end of the electrical cable 162 is connected to the PCB 400 (FIGS. 5A, 5B, 6A, 6B, 7 and 8). The PCB 400 includes eight (8) conductive metal (e.g., gold) plated pads; five (5) of which are connected to five (5) conductors located within electrical cable 162; two (2) of which are connected to the EEPROM Chip 410. It is hereby contemplated that the particular connections between the EEPROM Chip 410, PCB 400 and electrical cable 162 may be varied dependent upon the particular integrated circuits, circuit boards, cables and electrical connections used. In one embodiment, the PCB 400 containing the EEPROM Chip 410 slides into the first connector component 120 (FIG. 6B) before it is overmolded. In an alternate embodiment, the portion of the PCB 400 containing the EEPROM Chip 410 and cable connections are sealed and overmolded together with the strain relief 164. In either embodiment, the overmolded connector portion of the electrical cable 162 is permanently attached to the wall of the removable module (FIG. 3B). The first connector component 120 housing is designed so that it can be inserted and locked into a mating space in the removable module 100 so that the temperature probe 161 and electrical cable 162 becomes an integral part of the removable module 100.

Similarly, the second connector component 220 and its terminals pins or pads 221 are environmentally encapsulated so that there is no fluid penetration into the second connector component 220 and temperature calculation unit 200 case. The mating second connector component 220 (FIG. 2, 9A, 9B and 9C) includes stamped metal terminal pins 221 which are inserted into the connector housing 225 and sealed. The backend of these terminal pins 221 are soldered onto a printed circuit board of the temperature calculation unit 200 during the assembly process of other components. The connector housing 225 of the second connector component 220 is aligned and installed into a cavity (not shown) behind the back surface 262 (FIG. 2) of the temperature calculation unit 200, providing for a sealing arrangement between the back surface 262 of the temperature calculation unit 200, and the second connector component 220 including the terminal pins 221 and the connector housing 225. This sealing arrangement eliminates the possibility of any fluid ingression to the temperature calculating unit 200.

An exemplary embodiment of a second connector component 220 is illustrated in FIG. 9C. Grooves 223 on each side of the periphery of the second connector component 220 accepts and locks mating flanges 127 on the first connector component 120 (FIGS. 5B and 6B) to form an electrical connection when the removable module 100 (FIGS. 3A and 3B) is installed to the temperature calculating unit 200 (FIG. 2). The flanges 127 situated along the periphery of the first connector component 120 slide into the grooves 223 in the second connector component 220 when the removable module 100 is slidingly mated to the temperature calculating unit 200. Engagement between the flanges 127 on the first connector component 120 and the grooves 223 of the second connector component 220 ensure that spring loaded posts 121 are held in secure electrical contact with contact pads 221. Engagement between the flanges 127 on the first connector component 120 and the grooves 223 on the second connector component 220 also prevents fluid from reaching the contact area where it could potentially degrade the electrical contacts between the spring loaded posts 121 and the contact pads 221 or enter inside the temperature calculating unit 220.

The EEPROM Chip 410, embedded in the first connector component 120, holds all the necessary information and/or parameters that are required for an accurate two-point calibration of the thermistor sensors in each associated temperature probe 161 (FIG. 8). This information includes calibration related parameters such as thermistor resistor values at two different temperatures.

The EEPROM Chip 410 also holds information necessary for identifying the probe and probe type. This information includes the probe identification information related to type of removable module (rectal, or oral/axillary), unique assembly part numbers, date codes, Cyclical Redundancy Check (CRC) and other manufacturing related data. In an illustrative embodiment using the EEPROM IC Chip model DS2430A available from Dallas Semiconductor, the identifying information includes a unique factory laser-programmed and validated 64 bit registration number.

Although the memory component described herein is implemented illustratively in the form of an EEPROM Chip 410, it is contemplated that the temperature probe adapter according to the present disclosure can be implemented by various circuit configurations and/or memory elements. In an alternate embodiment, a radio-frequency (RF) transmission technique, that is wireless communication, can also be used to communicate between the temperature calculating unit or any other calibration station with the detachable ISO-Chamber based temperature probe assembly. The probe cable 162 can have an embedded Read only (R) or Read/Write (R/W) RFID-radio frequency identification transponder tag or microchip. The on-the-chip EEPROM can be wirelessly read and written from the base unit, i.e., the temperature calculating unit or any other calibration station.

Although the present disclosure is described herein with respect to illustrative embodiments thereof, it should be appreciated that the foregoing and various other changes, omissions or additions in the form and detail thereof may be made without departing from the scope of the disclosure. It is to be understood that the described embodiments of the disclosure are illustrative only, and that modifications thereof may occur to those skilled in the art. Accordingly, this disclosure is not to be regarded as limited to the embodiments disclosed, but is to be limited only as defined by the appended claims.

## Claims

1. An electronic thermometer comprising:
a temperature calculating unit (200); and
a removable module (100) connectable to said temperature calculating unit, the removable module including a temperature probe assembly, the temperature probe assembly having a memory (410) for storing calibration information and a temperature sensitive probe (160) and further comprising an electrical cable assembly (162) connected to said temperature sensitive probe and a connector (120);
**characterized in that**
said removable module includes a housing orifice (122) for detachably receiving said temperature probe assembly, a storage chamber (182) for storing disposable probe covers and an isolation chamber (140) for holding the temperature sensitive probe when not in use.

2. An electronic thermometer according to claim 1 wherein said memory (410) is capable of electrical communication with said temperature calculating unit (200) when said removable module (100) is installed to said temperature calculating unit.

3. An electronic thermometer according to claim 1 wherein said calibration information includes at least two calibration reference point parameters wherein each of said at least two calibration reference point parameters are taken at different temperatures.

4. An electronic thermometer according to claim 1 wherein said memory (410) includes an EEPROM.

5. An electronic thermometer according to claim 1 wherein said memory (410) is a 256 bit,1-Wire, parasite-power, EEPROM.

6. An electronic thermometer according to claim 1 wherein said removable module (100) includes means for storing probe-specific algorithm parameters.

7. An electronic thermometer according to claim 1 wherein said memory (410) is encapsulated within said removable module.

8. An electronic thermometer according to claim 1 wherein said memory (410) is incorporated in the probe assembly of said removable module.

9. An electronic thermometer according to claim 8 wherein connections to said memory are protected from fluid incursion.

10. An electronic thermometer according to claim 8 wherein said memory is disposed in a portion of said connector (120).

11. An electronic thermometer according to claim 1 wherein said connector (120) is a first connector component (120), and wherein said first connector component includes fluid resistant mating terminals providing electrical connections to said probe and said memory wherein said memory is incorporated within said probe assembly.

12. An electronic thermometer according to claim 11 wherein said memory (410) is overmolded within said first connector component.

13. An electronic thermometer according to claim 11 wherein said temperature calculating unit (200) includes a header assembly (220) incorporated therewith, said header assembly (220) including header terminals (221) in electrical connection with a microprocessor system, said header assembly matable with said first connector component of said removable module.

14. An electronic thermometer according to claim 13 wherein said header assembly (220) is fluid resistant, said header assembly preventing fluid incursion to said microprocessor system.

15. An electronic thermometer according to claim 11. wherein said probe includes at least one thermistor electrically connected with said terminals, and wherein said calibration information includes resistance values of each of said at least one thermistor, said resistance values corresponding to at least two different reference temperatures.

16. An electronic thermometer according to claim 11 wherein said memory stores temperature probe identifying information.

17. An electronic thermometer according to claim 16 wherein said probe identifying information includes a unique identification number associated with said temperature probe.

18. An electronic thermometer according to claim 17 wherein said unique identification number is a pre-programmed and validated EEPROM registration number.

## Patentansprüche

1. Elektronisches Thermometer, das Folgendes umfasst:
eine Temperaturberechnungseinheit (200); und
ein entfernbares Modul (100), das mit der Temperaturberechnungseinheit verbunden werden kann, wobei das entfernbare Modul eine Temperatursondenanordnung enthält, wobei die Temperatursondenanordnung einen Speicher (410) zum Speichern von Kalibrierungsinformationen und eine temperaturempfindliche Sonde (160) aufweist und weiterhin eine elektrische Kabelanordnung (162), die mit der temperaturempfindlichen Sonde verbunden ist, und einen Verbinder (120) umfasst;
**dadurch gekennzeichnet, dass**
das entfernbare Modul eine Gehäuseöffnung (122) zur lösbaren Aufnahme der Temperatursondenanordnung, eine Lagerungskammer (182) zum Lagern von wegwerfbaren Sondenabdeckungen und eine Isolierkammer (140) zum Aufnehmen der temperaturempfindlichen Sonde, wenn sie nicht in Gebrauch ist, enthält.

2. Elektronisches Thermometer nach Anspruch 1, wobei der Speicher (410) mit der Temperaturberechnungseinheit (200) elektrisch kommunizieren kann, wenn das entfernbare Modul (100) in der Temperaturberechnungseinheit installiert ist.

3. Elektronisches Thermometer nach Anspruch 1, wobei die Kalibrierungsinformationen mindestens zwei Kalibrierungsbezugspunktparameter enthalten, wobei jeder der mindestens zwei Kalibrierungsbezugspunktparameter bei verschiedenen Temperaturen genommen wurde.

4. Elektronisches Thermometer nach Anspruch 1, wobei der Speicher (410) einen EEPROM enthält.

5. Elektronisches Thermometer nach Anspruch 1, wobei der Speicher (410) ein 256-bit Ein-Draht-Parasite-Power-EEPROM ist.

6. Elektronisches Thermometer nach Anspruch 1, wobei das entfernbare Modul (100) Mittel zum Speichern von sondenspezifischen Algorithmusparametern enthält.

7. Elektronisches Thermometer nach Anspruch 1, wobei der Speicher (410) in dem entfernbaren Modul verkapselt ist.

8. Elektronisches Thermometer nach Anspruch 1, wobei der Speicher (410) in der Sondenanordnung des entfernbaren Moduls enthalten ist.

9. Elektronisches Thermometer nach Anspruch 8, wobei Verbindungen mit dem Speicher gegen Eindringen von Fluid geschützt sind.

10. Elektronisches Thermometer nach Anspruch 8, wobei der Speicher in einem Teil des Verbinders (120) angeordnet ist.

11. Elektronisches Thermometer nach Anspruch 1, wobei der Verbinder (120) eine erste Verbinderkomponente (120) ist und wobei die erste Verbinderkomponente fluidbeständige Gegen-Anschlüsse enthält, die elektrische Verbindungen mit der Sonde und dem Speicher bereitstellen, wobei der Speicher in der Sondenanordnung enthalten ist.

12. Elektronisches Thermometer nach Anspruch 11, wobei der Speicher (410) in der ersten Verbinderkomponente umspritzt ist.

13. Elektronisches Thermometer nach Anspruch 11, wobei die Temperaturberechnungseinheit (200) eine darin eingebaute Verbindungsanordnung (220) enthält, wobei die Verbindungsanordnung (220) Verbindungsanschlüsse (221) enthält, die mit einem Mikroprozessorsystem in elektrischer Verbindung stehen, wobei die Verbindungsanordnung mit der ersten Verbinderkomponente des entfernbaren Moduls zusammengefügt werden kann.

14. Elektronisches Thermometer nach Anspruch 13, wobei die Verbindungsanordnung (220) fluidbeständig ist, wobei die Verbindungsanordnung ein Eindringen von Fluid zu dem Mikroprozessorsystem verhindert.

15. Elektronisches Thermometer nach Anspruch 11, wobei die Sonde mindestens einen Thermistor enthält, der mit den Anschlüssen elektrisch verbunden ist, und wobei die Kalibrierungsinformationen Widerstandswerte jedes des mindestens einen Thermistors enthalten, wobei die Widerstandswerte mindestens zwei verschiedenen Bezugstemperaturen entsprechen.

16. Elektronisches Thermometer nach Anspruch 11, wobei der Speicher Temperatursondenidentifikationsinformationen speichert.

17. Elektronisches Thermometer nach Anspruch 16, wobei die Sondenidentifikationsinformationen eine einzigartige Identifikationszahl enthalten, die der Temperatursonde zugeordnet ist.

18. Elektronisches Thermometer nach Anspruch 17, wobei die einzigartige Identifikationszahl eine vorprogrammierte und validierte EEPROM-Registrierungsnummer ist.

## Revendications

1. Thermomètre électronique comprenant :
une unité de calcul de la température (200) ; et
un module amovible (100) qui peut être raccordé à ladite unité de calcul de la température, le module amovible comprenant un ensemble sonde de température, l'ensemble sonde de température disposant d'une mémoire (410) pour stocker des informations de calibrage et d'une sonde sensible à la température (160) et comprenant en plus un ensemble câble électrique (162) raccordé à ladite sonde sensible à la température et un connecteur (120) ;
**caractérisé en ce que**
ledit module amovible comprend un orifice de boîtier (122) pour recevoir de manière démontable ledit ensemble sonde de température, une chambre de stockage (182) pour stocker des couvre-sondes jetables et une chambre d'isolation (140) pour conserver la sonde sensible à la température lorsqu'elle n'est pas utilisée.

2. Thermomètre électronique selon la revendication 1, ladite mémoire (410) étant capable de communiquer électriquement avec ladite unité de calcul de la température (200) lorsque ledit module amovible (100) est monté sur ladite unité de calcul de la température.

3. Thermomètre électronique selon la revendication 1, lesdites informations de calibrage comprenant au moins deux paramètres de point de référence de calibrage, chacun desdits au moins deux paramètres de point de référence de calibrage étant relevé à des températures différentes.

4. Thermomètre électronique selon la revendication 1, ladite mémoire (410) comprenant une EEPROM.

5. Thermomètre électronique selon la revendication 1, ladite mémoire (410) étant une EEPROM de 256 bits, 1 fil, à puissance parasite.

6. Thermomètre électronique selon la revendication 1, ledit module amovible (100) comprenant des moyens pour stocker des paramètres d'algorithme spécifiques à la sonde.

7. Thermomètre électronique selon la revendication 1, ladite mémoire (410) étant scellée dans ledit module amovible.

8. Thermomètre électronique selon la revendication 1, ladite mémoire (410) étant incorporée dans l'ensemble sonde dudit module amovible.

9. Thermomètre électronique selon la revendication 8, les connexions vers ladite mémoire étant protégées contre la pénétration de fluides.

10. Thermomètre électronique selon la revendication 8, ladite mémoire étant disposée dans une portion dudit connecteur (120).

11. Thermomètre électronique selon la revendication 1, ledit connecteur (120) étant un premier composant de connecteur (120) et ledit premier composant de connecteur comprenant des bornes d'accouplement résistantes aux fluides réalisant des connexions électriques vers ladite sonde et ladite mémoire, ladite mémoire étant incorporée dans ledit ensemble sonde.

12. Thermomètre électronique selon la revendication 11, ladite mémoire (410) étant surmoulée à l'intérieur dudit premier composant de connecteur.

13. Thermomètre électronique selon la revendication 11, ladite unité de calcul de la température (200) comprenant un ensemble socle (200) incorporé dans celle-ci, ledit ensemble socle (200) comprenant des bornes de socle (221) en liaison électrique avec un système à microprocesseur, ledit ensemble socle pouvant être accouplé avec ledit premier composant de connecteur dudit module amovible.

14. Thermomètre électronique selon la revendication 13, ledit ensemble socle (220) étant résistant aux fluides, ledit ensemble socle empêchant la pénétration de fluides vers ledit système à microprocesseur.

15. Thermomètre électronique selon la revendication 11, ladite sonde comprenant au moins une thermistance reliée électriquement avec lesdites bornes, et lesdites informations de calibrage comprenant les valeurs de résistance de chacune desdites au moins une thermistance, lesdites valeurs de résistance correspondant à au moins deux températures de référence différentes.

16. Thermomètre électronique selon la revendication 11, ladite mémoire stockant des informations d'identification de la sonde de température.

17. Thermomètre électronique selon la revendication 16, lesdites informations d'identification de la sonde comprenant un numéro d'identification unique associé à ladite sonde de température.

18. Thermomètre électronique selon la revendication 17, ledit numéro d'identification unique étant un numéro d'enregistrement d' EEPROM préprogrammé et validé.
